# EUROPÄISCHE PATENTSCHRIFT

(11) **EP 2 295 915 B1**
(45) Veröffentlichungstag und Bekanntmachung des Hinweises auf die Patenterteilung: **28.06.2017**
(21) Anmeldenummer: 10008112.4
(22) Anmeldetag: 04.08.2010
(51) Int. Cl.: F28D 7/10, F28F 9/02, F16L 39/00, F28D 7/12, F28D 7/16

(54) **Doppelmantelrohr mit integriertem Rücklauf**
Double jacket tube with integrated return
Tuyau à deux enveloppes doté d'un retour intégré

(30) Priorität: 04.08.2009 DE 102009035986
(43) Veröffentlichungstag der Anmeldung: 16.03.2011
(73) Patentinhaber: Valentin, Horst, 90537 Feucht (DE)
(72) Erfinder: Valentin, Horst, 90537 Feucht (DE)
(74) Vertreter: Küchler, Stefan

(56) Entgegenhaltungen:
- DE-A1- 19 714 760
- GB-A- 1 412 428
- GB-A- 1 468 421
- JP-U- S6 438 467
- JP-U- S59 108 064
- US-A- 4 846 228

## Beschreibung

Die Erfindung richtet sich auf eine Einrichtung zur Temperierung eines Fluids in Form einer Rohrleitung mit einem ersten, zentralen Hohlraum für das zu temperierende Medium, sowie mit einem dieses umgebenden, zweiten Hohlraum für ein Heiz- oder Kühlmedium mit wenigstens einem Einlaß und wenigstens einem Auslaß zur Durchleitung des Heiz- oder Kühlmediums. Eine Einrichtung nach dem Oberbegriff des Anspruchs 1 ist aus JP S 59 108064 U bekannt. Es gibt eine Reihe von Substanzen, welche zur Verarbeitung vorübergehend auf einer von der Umgebungstemperatur abweichenden Temperatur gehalten werden müssen. Insbesondere für eine anschießende Formgebung muß ein bei Raumtemperatur festes Medium zunächst verflüssigt werden, was zumeist durch eine Temperaturzufuhr erfolgt wie bspw. im Fall von Kunststoffen oder Lebensmitteln wie bspw. Schokolade. Andere Medien müssen aus den vielfältigsten Gründen gekühlt werden, bspw. Speiseeis.

Für derartige Fälle ist bereits vorgeschlagen worden, eine Rohrleitung mit einem doppelten Mantel zu versehen und in dem Raum zwischen den beiden Mantelflächen ein Heiz- oder Kühlmedium strömen zu lassen, welches von einer externen Einrichtung auf die gewünschte Temperatur gebracht wird. Meist fließt das Heiz- oder Kühlmedium in einem geschlossenen Kreislauf zurück zu der externen Temperierungseinrichtung. Diese Rückleitung erfolgt üblicherweise in einem Schlauch oder einer getrennten Rohrleitung, räumlich getrennt von der zu temperierenden Leitung.

Dies hat zur Folge, dass das Heiz- oder Kühlmedium entlang der Rückleitung mit der Umgebung Wärme austauscht, was einerseits einen erhöhten Energiebedarf darstellt und andererseits zu unangenehmen Temperaturen in der Umgebung der zu temperierenden Leitung führen kann. Eine Isolation der Rückleitung kann diesen Effekt zwar mindern, aber nicht ganz eliminieren.

Die DE 31 05 406 A1 offenbart ein Verbindungselement für Doppelrohre. Will man diese Anordnung zur Temperierung eines Mediums verwenden, ist ein externer, verlustbehafteter Rücklauf das Temperierungsmediums erforderlich.

Das deutsche Gebrauchsmuster DE 90 13 315 U1 betrifft einen Doppelrohrwärmetauscher, wobei das Temperierungsmedium an den Anschlüssen nicht an den selben Endflanschen übergeben wird wie das zu temperierende medium, und betrifft daher einen weiter ab liegenden Stand der Technik. Im Übrigen ist eine Rückströmung des Temperierungsmediums hier überhaupt nicht vorgesehen.

Ähnliches gilt auch für die EP 0 108 525 A1: Auch hier findet keine Übergabe aller vor und zurück strömenden Medien an den selben Endflanschen statt, sondern an unterschiedlichen, voneinander räumlich getrennten Anschlüssen. Außerdem muß der Kreislauf für das Temperierungsmedium über eine externe, verlustbehaftete Leitung geschlossen werden.

Die DE 196 53 613 A1 betrifft kein Rohrleitungssystem mit einer kontinuierlichen Durchströmung des zu temperierendenn Mediums zwischen zwei Endflanschen, sondern ein konzentriertes Wärmetauscher-Bauteil ohne jegliche Endflansche.

Die DE 10 2007 058 334 B3 zeigt einen diskreten Wärmetauscher und nicht ein über aneinander passende Endflansche zu einer Rohrleitung zusammensetzbare Rohrstücke. Im Übrigen ist hier eine konzentrische Führung verschiedener Medien nicht vorgesehen.

Der DE 196 24 937 A1 ist ein konzentriertes Wärmetauschergerät zu entnehmen, nicht dagegen eine langgestreckte, über Endflansche aneinander setzbare Rohrleitung für eine kontinuierliche Durchströmung mit einer großflächigen Temperierung. Darüber hinaus sind die Rohre im Inneren gewendelt und nicht gerade, was die Komplexität und damit die Herstellungskosten zusätzlich steigert.

Bei einem aus der DE 39 36 472 A1 vorbekannten, flexiblen Kunststoff-Rohrsystem sind die einzelnen Rohre ohne thermischen Kontakt zueinander geführt; da auch der Zwischenraum zwischen den Rohren nicht für ein Strömnungsmedium vorgesehen ist, eignet sich diese Anrodnung überhaupt nicht zum temperieren eines flüssigen Mediums.

Aus den Nachteilen des beschriebenen Standes der Technik resultiert das die Erfindung initiierende Problem, eine gattungsgemäße Einrichtung zur Temperierung eines Fluids dahingehend weiterzubilden, dass der Energieverlust minimal ist, insbesondere auch im Bereich einer Rückleitung eines in sich geschlossenen Kreislaufs für ein Heiz- oder Kühlmedium.

Die Lösung dieses Problems gelingt durch wenigstens einen dritten, mit der Rohrleitung integrierten Hohlraum zur Rückleitung des Heiz- oder Kühlmediums, wobei der Auslaß des dritten Hohlraums sich in der Nähe des Einlasses des zweiten Hohlraums befindet und der dritte Hohlraum von dem zweiten Hohlraum getrennt ist oder über seinen Einlaß mit dem Auslaß des zweiten Hohlraums gekoppelt ist.

Durch Integration, d.h. bauliche Vereinigung, des Rückleitungshohlraums mit dem Durchleitungshohlraum findet zumindest ein Teil des Wärmeaustauschs der Rückleitung nicht gegenüber der Umgebung statt, sondern gegenüber dem Durchleitungshohlraum, im Idealfall kann der Wärmeaustausch zwischen Rückleitungshohlraum und Umgebung auch vollständig zu Null werden. Die erfindungsgemäße Anordnung profitiert dabei außerdem von den folgenden, vorteilhaften Eigenschaften:
Da die erfindungsgemäße Einrichtung nicht die Gestalt eines Behälters oder einer Armatur aufweist, sondern einer Rohrleitung, findet der Wärmeaustausch zwischen dem Temperierungsmedium und dem zu temperierenden Medium großflächig über die gesamte Rohrleitung verteilt statt, ist also nicht auf ein kleines Volumen konzentriert wie in einem üblichen Wärmetauscher. Demzufolge kann das zu temperierende Medium in einer kontinuierlichen Strömung durch die erfindungsgemäße Einrichtung fließen, im Gegensatz bspw. zu boilerartigen Anordnungen, welche nur einen chargenweisen Betrieb zulassen, weil dort das zu temperierende Medium zu seiner Temperierung über einen bestimmten Zeitraum hinweg in der Gerätschaft verweilen muß. Einen weiteren Vorteil bieten die erfindungsgemäßen, vorzugsweise systematisch genormten Flansche an allen Rohrenden, an welchen die Hohlräume ausschließlich münden. Das bedeutet, dass gerade auch im Bereich eines Endflansches eine seitliche Zu- oder Abführung eines Mediums nicht erforderlich ist. Die Anordnung der verschiedenen Hohlräume zwischen den Endflanschen erleichtert überdies den Zusammenbau der Anordnung bspw. durch Schweißen. Ein weiterer Vorteil der Endflansche, an welchen alle Hohlräume münden, besteht darin, dass die dortigen Mündungen jeweils separat mit einer vorzugsweise ringförmigen Dichtung abgedichtet sein können, so dass Mündungen für verschiedene Medien (für das Temperierungsmedium einerseits und für das zu temperierendes Medium andererseits) stets durch zwei ringförmige Dichtungen (an jeder Mündung eine) voneinander getrennt sind. Diese doppelte Trennung bietet eine erheblich größere Sicherheit gegenüber dem unerwünschten Vermischen beider Flüssigkeiten im Fall des Undichtwerdens einer Dichtung. In diesem Fall wird das betreffende Medium zwar nach außen austreten und somit erkannt, wodurch die Leckage behoben werden kann; die zweite Dichtung verhindert jedoch ein Übertreten eines Mediums in den Hohlraum des anderen. Die erfindungsgemäße Anordnung mit gemeinsam integriertem Vor- und Rückleitungshohlraum begünstigt es außerdem, ein flüssiges Temperierungsmedium bspw. mit Preßluft oder einem anderen, gasförmigen Medium auszuschieben, so dass die Rohrleitung für Wartungsarbeiten frei ist. Andererseits ist bei einem offenen Temperierungs-Rohrleitungssystem kein Entlüftungsventil erforderlich, bei einem geschlossenen Ventil ist pro Anlage nur ein einziges Entlüftungsventil erforderlich. Weiterhin besteht auch die Möglichkeit, nach einer Reinigung ein Kühlrohr bspw. mit Leitungswasser zu spülen, um dieses von einer erhöhten Temperatur des Reinigungsmediums auf die Temperatur des Leitungswassers herabzukühlen, wobei das erwärmte Spülwasser in die Kanalisation geleitet werden kann; erst anschließend wird das Kühlmeidum wieder eingeleitet, welches sodann nur noch eine geringe Temperaturdifferenz herabkühlen muß - der Vorteil ist ein erheblich reduzierter Energiebedarf. Ein weiterer Vorteil, der ebenfalls nicht unterschätzt werden sollte, liegt darin, dass gerade auch im Bereich der Endflansche kein Temperaturleck entsteht, also keine kalten oder heißen Stellen für einen beständigen Energieverlust sorgen.

Ein erfindungsgemäßes Teil zeichnet sich weiterhin aus durch einen, zwei oder drei Flansche, entsprechend einem Rohrleitungsendstück, einer normalen Rohrleitung und einem T- bzw. Abzweigstück.

Es hat sich als günstig erwiesen, dass sämtliche Hohlräume in einem oder mehreren Flanschen münden. Im Bereich eines solchen Flanschs ist ein Aus- oder Eintritt eines Mediums in die betreffende Leitung möglich.

Es liegt im Rahmen der Erfindung, dass sämtliche Mündungen verschiedener Hohlräume im Bereich eines Flanschs durch voneinander getrennte Dichtungsringe gegeneinander isoliert sind. Damit ist ein Maximum an Sicherheit geschaffen, so dass selbst beim Bruch einer Dichtung immer noch eine weitere Dichtung vor einem direkten Kontakt verschiedener Medien schützt. Das sodann im Bereich eines Flanschs nach außen quellende Medium wird sodann optisch wahrgenommen, und es können Gegen- bzw. Reparaturmaßnahmen eingeleitet werden, noch bevor ein Kontakt zwischen den beteiligten Medien stattgefunden hat. Dies kann deshalb von Vorteil sein, weil beim Kontakt von Heiz- oder Kühlmedium einerseits und zu temperierendem Medium andererseits unübersehbare Folgen eintreten können, bspw. eine plötzliche Verfestigung des zu temperierenden Mediums, oder gar eine chemische Reaktion.

Bevorzugt besteht eine Begrenzung des ersten, zweiten und/oder dritten Hohlraums aus Metall, insbesondere aus Stahl. Metall hat eine gute thermische Leitfähigkeit und erlaubt daher einen intensiven Wärmeaustausch zwischen verschiedenen, nur durch eine Begrenzungswand voneinander getrennten Medien. Andererseits ist ein Metall ab einer gewissen Mindeststärke äußerst robust und formstabil, so dass die beteiligten Medien sogar unterschiedlichen Druck aufweisen können.

Darüber hinaus ist es auch möglich, dass eine Begrenzung des ersten, zweiten und/oder dritten Hohlraums nach Art eines Faltenbalgs ausgebildet ist. Dadurch ist eine gewisse thermische Ausdehnung möglich, die beim Aufheizen der Rohrleitung stets erfolgt, ohne Längenveränderung des betreffenden Teils, und daher ohne Auftreten gefährlicher mechanischer Spannungen in einer Rohrleitungsanlage, selbst wenn dieselbe sich über viele Meter hinweg erstreckt.

Die äußere Ummantelung kann isoliert sein, bspw. durch eine Art Manschette. Damit läßt sich der Wärmeverlust gegenüber der Umgebung insgesamt minimieren.

Erfindungsgemäß ist weiterhin vorgesehen, dass der erste bzw. zentrale Hohlraum einen kreisförmigen Querschnitt aufweist. Eine rotationssymmetrische Rohrleitung bietet ein Höchstmaß an mechanischer Stabilität.

Die Erfindung erlaubt darüber hinaus, dass der erste bzw. zentrale Hohlraum für einen Molch durchgängig ausgebildet ist. Damit ist eine Entleerung, Reinigung und ggf. Inspektion des zentralen Hohlraums ohne Demontage der gesamten Anlage möglich. Dies bedeutet insbesondere, dass keine Klappen oder sonstigen Elemente den Durchgang eines Molchs behindern sollten.

Der zentrale Hohlraum kann sich verzweigen, bspw. in Form eines T-Stücks, so dass das zu temperierende Medium zu verschiedenen Bearbeitungs-, Abfüll- oder Formgebungsstationen geleitet werden kann.

Ferner kann der erste bzw. zentrale Hohlraum offen- und/oder absperrbar sein, bspw. durch einen Schieber oder eine Klappe. Damit läßt sich der Massestrom in dem zentralen Hohlraum steuern, bspw. im Bereich eines Abzweigstücks. Wenn der erste bzw. zentrale Hohlraum durch eine Kugel mit einer Durchgangsöffnung offen- und/oder absperrbar ist, so bleibt im geöffneten Zustand der Weg für einen Molch frei. Der erste bzw. zentrale Hohlraum im Bereich eines Flansches mündet in einer zentralen Öffnung.

Die Erfindung sieht weiterhin vor, dass der zweite Hohlraum durch zwei konzentrische Rohre berandet wird. Während das innere Rohr gleichzeitig auch die Begrenzung des ersten bzw. zentralen Hohlraums darstellt, dient das äußere Rohr der Abgrenzung gegenüber der Umgebung und ist bevorzugt auf seiner Außenseite mit einer thermischen Isolation versehen.

Aus Gründen der Stabilität mündet der zweite Hohlraum im Bereich eines Flansches nicht in Form einer ringförmigen Öffnung, sondern in wenigstens einer einfach zusammenhängenden Öffnung, bevorzugt in zwei einander etwa diametral gegenüber liegenden Öffnungen. Zwar entsteht daher im Bereich der Flansche eine gewisse Verengung des Strömungsquersschnitts für das Heiz- oder Kühlmedium, was jedoch hinnehmbar ist, insbesondere wenn es mehrere derartige Öffnungen gibt, bspw. deren zwei, drei oder vier, welche bevorzugt in äquidistanten Abständen entlang des Umfangs verteilt sind.

Demgegenüber ist der dritte Hohlraum bevorzugt durch ein oder mehrere Rohre gebildet, welche(r) innerhalb des zweiten Hohlraums verläuft (verlaufen). Durch diese Maßnahme wird ein thermischer Kontakt des zurückströmenden Heiz- oder Kühlmediums mit der Umgebung vermieden, das zurückströmende Medium ist samt seiner Begrenzung vollständig von dem hinströmenden Teil des Mediums umschlossen; daher findet allenfalls ein Wärmeaustausch in umgekehrter Richtung statt als dies mit der Umgebung der Fall wäre: Bspw. nimmt das im Hinlauf abgekühlte Heizmedium beim Rücklauf wieder Wärme auf, anstatt seine (Rest-) Wärme an die Umgebung abzugeben; das im Hinlauf erwärmte Kühlmedium gibt bei seinem Rücklauf Wärme an den vorströmenden Teil des Kühlmediums ab, kühlt sich also wieder ab. Entsprechend ist der Energiebedarf bspw. bei einem externen Wärmetauscher geringer.

Ein weiterer Vorteil der Erfindung ist, dass der Abstand zwischen zwei Rohren des dritten Hohlraums kleiner ist als ihr doppelter Abstand zum Zentrum des ersten Hohlraums. Mehrere Rohre des dritten Hohlraums können daher auf einem vergleichsweise kleinen Querschnittsbereich zusammengefaßt werden, so dass in dem restlichen Querschnittsbereich Platz für spezielle Einrichtungen bleibt.

Bei einer Standardausführungsform erstrecken sich ein oder mehrere Rohre des dritten Hohlraums zwischen zwei Flanschen durchgehend und münden in beiden Flanschen. Solchenfalls dient der dritte Hohlraum ausschließlich der rückwärtigen Durchleitung des Heiz- oder Kühlmediums. Die Standardausführungsform findet sich insbesondere an temperierbaren Rohrleitungen ohne Abzweig- oder Endstück.

Im Rahmen einer anderen Ausführungsform münden ein oder mehrere Rohre des dritten Hohlraums nur in einem Flansch und erstrecken sich bis in die Nähe eines anderen Flansches, wo sie aber nicht münden. Hierbei handelt es sich bevorzugt um Endstücke des Heiz- oder Kühlkreislaufs - nicht jedoch des zentralen Leitungssystems, welches stets an jedem Flansch offen ist, damit das zu temperierende Medium ungehindert strömen kann. Betroffen sind daher bspw. "Übergabestationen", wo das zu temperierende Medium bspw. in ein Behältnis oder eine Maschine einströmt, die entweder durch eine eigene Heiz- oder Kühleinrichtung temperiert wird, oder wo dem temperierten Medium ein thermischer Angleich an die Umgebungstemperatur erlaubt wird.

Diese Ausführungsform läßt sich dahingehend weiterbilden, dass ein oder mehrere Rohre des dritten Hohlraums im Bereich ihres/ihrer freien Endes (-en) umgebogen ist/sind, insbesondere in die selbe Richtung umgebogen. Die freien Enden des dritten Hohlraums münden in dem zweiten Hohlraum; an dieser Stelle befindet sich der Umkehrpunkt zwischen vor- und zurückströmendem Teil des Mediums. Mit der Lage dieser freien Enden lassen sich daher vorteilhafte Eigenschaften erzielen: Wenn diese freien Enden nach oben umgebogen sind bis knapp unterhalb den obersten Abschnitt des zweiten Hohlraums, kann erreicht werden, dass das Heiz- oder Kühlmedium zunächst den zweiten Hohlraum weitestgehend oder - im Idealfall - vollständig ausfüllen muß, bis es in den dritten Hohlraum einströmt und innerhalb desselben zurückfließt.

Die Mündungen mehrerer, vorzugsweise aller Rohre des dritten Hohlraums sollten auf dem selben Abschnitt eines Flanschs liegen, der von zwei Mündungen des zweiten Hohlraums abgegrenzt wird. Dies entspricht der bevorzugten Rohrführung mehrerer Rohre des dritten Hohlraums, womit der Zweck verfolgt wird, in dem gegenüber liegenden Abschnitt Platz für besondere Installationen - bspw. im Bereich eines T- oder Abzweigstücks zu lassen.

Wenn der Gesamtquerschnitt durch alle zueinander parallelen Rohre des dritten Hohlraums etwa gleich dem daneben verbleibenden Gesamtquerschnitt des zweiten Hohlraums ist, so ist die Strömungsgeschwindigkeit im Vor- und Rücklauf etwa gleich groß. Bevorzugt wird jedoch eine Ausbildung, wobei der Vorlauf (zweiter Hohlraum) einen deutlich größeren Querschnitt aufweist als der Rücklauf (dritter Hohlraum). Dies hat zur Folge, dass das Heiz- oder Kühlmedium im Vorlauf ausreichend Gelegenheit hat, um seine Wärme mit dem zu temperierenden Medium auszutauschen, während das im Rücklauf schneller strömende Heiz- oder Kühlmedium nur wenig Gelegenheit hat, um Wärme mit dem vorlaufenden Anteil des Mediums auszutauschen.

Das Heiz- oder Kühlmedium kann bspw. ausgewählt werden aus einer Gruppe umfassend Wasser, Sole, Glycol, Alkohol oder Öl.

Als temperierbare Medien eignen sich bspw. Kunststoffe, insbesondere Thermoplaste, ferner Lebensmittel, bspw. Fette, Margarine, Schokolade, Eis, etc.

Schließlich entspricht es der Lehre der Erfindung, dass das Heiz- oder Kühlmedium und/oder das zu temperierende Medium unter Druck steht. Dadurch kann bspw. der Siedepunkt heraufgesetzt werden, so dass sich bspw. Wasser auch als Heizmedium für Temperaturen oberhalb von 100 °C eignet. Bei wesentlich höheren Temperaturen dürfte Öl die bessere Alternative sein.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Abschnitt eines erfindungsgemäßen Rohrleitungssystems im Längsschnitt;
- Fig. 2: eine Draufsicht auf einen Flansch eines erfindungsgemäßen Rohrleitungs-Teils entsprechend einem Schnitt durch die Fig. 1 entlang der Linie II - II;
- Fig. 3: einen Schnitt durch ein erfindungsgemäßes T-Stück entlang der Linie III - III in Fig. 1; sowie

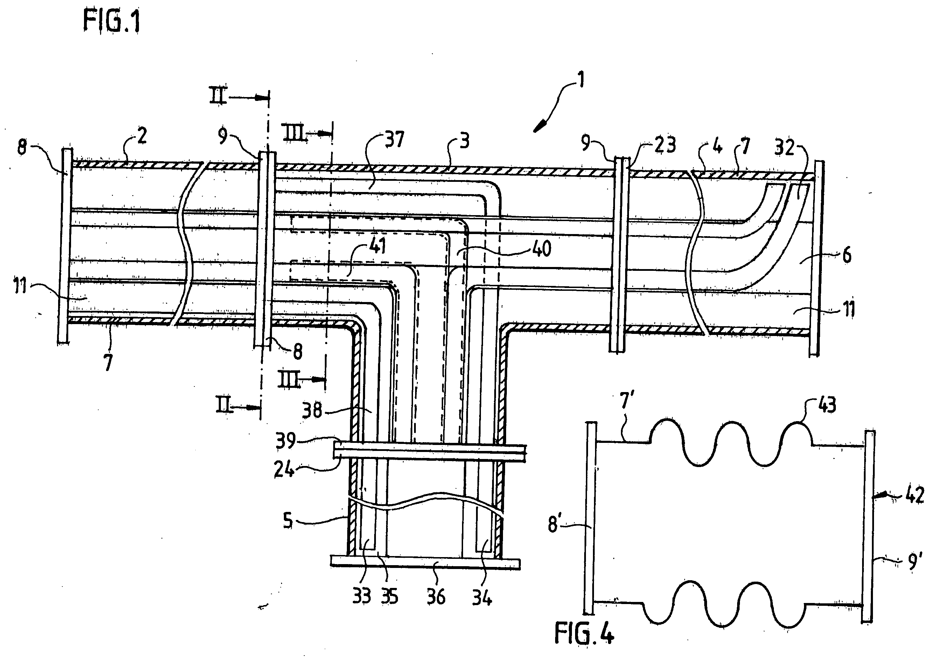

Bei der Erfindung handelt es sich um eine Art Baukastensystem zur Erstellung von Rohrleitungsanlagen 1 zum Transport eines Mediums unter gleichzeitiger Kühlung. Wie man bspw. der Fig. 1 erkennen kann, gibt es als Grundbaustein eines solchen Systems Standardrohre 2 mit konstantem Querschnitt. Ferner sind vorgesehen T- oder Abzweigstücke 3 sowie verschiedene Endstücke 4, 5. Nicht dargestellt sind weitere Armaturen, bspw. Absperrhähne od. dgl., welche aber im Wesentlichen eine Modifikation des grundlegenden Standardrohrs 2 darstellen.

Das Standardrohr 2 besteht aus zwei zueinander konzentrischen Rohren, nämlich einem inneren Rohr 6 und einem äußeren Rohr 7. Diese sind gleich lang und im Bereich ihrer Enden jeweils durch einen Flansch 8, 9 miteinander verbunden. Vorzugsweise sind diese Teile 6 bis 9 miteinander verschweißt; sie könnten aber bspw. auch miteinander verlötet oder verklebt sein.

Das innere Rohr 6 umschließt einen ersten oder zentralen, einfach zusammenhängenden Hohlraum 10, während sich in dem Bereich zwischen den beiden Rohren 6, 7 ein zweiter, ringförmiger, wenigstens zweifach zusammenhängender Hohlraum 11 befindet. Während in dem ersten Hohlraum 10 nur das zu temperierende Medium M₁ strömt, dient der zweite Hohlraum 11 der Leitung eines Kühl- oder Heizmediums M₂.

Jeder Flansch 8, 9 hat im Wesentlichen eine kreisringscheibenförmige Gestalt, mit einer zentralen Ausnehmung 12 in der Mitte, welche etwa deckungsgleich mit dem Querschnitt des ersten Hohlraums 10 ist. Diese Ausnehmung 12 kann von einer kreisringförmigen Einsenkung 13 umgeben sein, zur Aufnahme eines Dichtungsrings 14, um den von dem ersten Hohlraum 10 gebildeten Strömungspfad für das zu temperierende Medium M₁ im Bereich des Stoßes zwischen zwei Flanschen 8, 9 aneinandergesetzter Teile 2 bis 5 vollständig abzudichten.

Der Außenumfang 15 eines Flanschs 8, 9 hat dagegen einen größeren Durchmesser als das äußere Rohr 7. In dem radial nach außen überstehenden Ringbereich 16 sind mehrere Bohrungen 17 angeordnet, welche zum Hindurchstecken von Schrauben dienen, um verschiedene Teile 2 bis 5 des Baukastensystems zusammenzuschrauben.

Der innere, ringförmige Bereich 18 eines Flansches 8, 9 zwischen dem inneren Rohr 6 und dem äußeren Rohr 7 weist im vorliegenden Beispiel zwei Durchbrechungen 19, 20 auf, welche einander diametral gegenüber liegen und zur Weiterleitung des vorlaufenden Heiz- oder Kühlmediums M₂ im Bereich des Stoßes zwischen den Flanschen 8, 9 aneinandergesetzter Teile 2 bis 5 dienen. Vorzugsweise entspricht der Durchmesser einer dieser Ausnehmungen 19, 20 etwa dem radialen Abstand zwischen den beiden zueinander konzentrischen Rohren 6, 7. Auch diese vorzugsweise kreisrunden Durchbrechungen 19, 20 sollten von je einer Einsenkung 21 ringförmig umgeben sein, worin ein eigener Dichtungsring 22 Platz findet.

Die Lage der Mündungen 12, 19, 20 der Hohlräume 10 und 11 ist bei allen Flanschen 8, 9 der Standardrohre 2 und des Abzweigstücks 3 sowie bei einem Anschlußflansch 23, 24 der Endstücke 4, 5 jeweils in identischer Form vorhanden, so dass all diese Stücke 2 bis 5 miteinander kompatibel sind.

Damit das innerhalb des zweiten Hohlraums 11 vorströmende Heiz- oder Kühlmedium M₂ auch innerhalb der Rohrleitung 1 bis 6 wieder zurück zu einem nicht dargestellten Wärmetauscher od. dgl. strömen kann, ist außerdem ein dritter Hohlraum 25 vorgesehen.

Dieses besteht bei dem Standardrohr 2 aus zwei vergleichsweise dünnen Rohren 26, 27, welche parallel zueinander sowie innerhalb des zweiten Hohlraums 11 angeordnet sind. Der Außendurchmesser dieser Rohre 26, 27 ist kleiner als die radiale Erstreckung des ringförmigen zweiten Hohlraums 11, so dass die Rohre 26, 27 weder an dem inneren noch an dem äußeren Rohr 6, 7 anliegen. Sie werden innerhalb des zweiten Hohlraums 11 nur im Bereich der Flansche 8, 9 gehalten, mit denen sie verbunden, insbesondere verschweißt, verlötet oder verklebt sind.

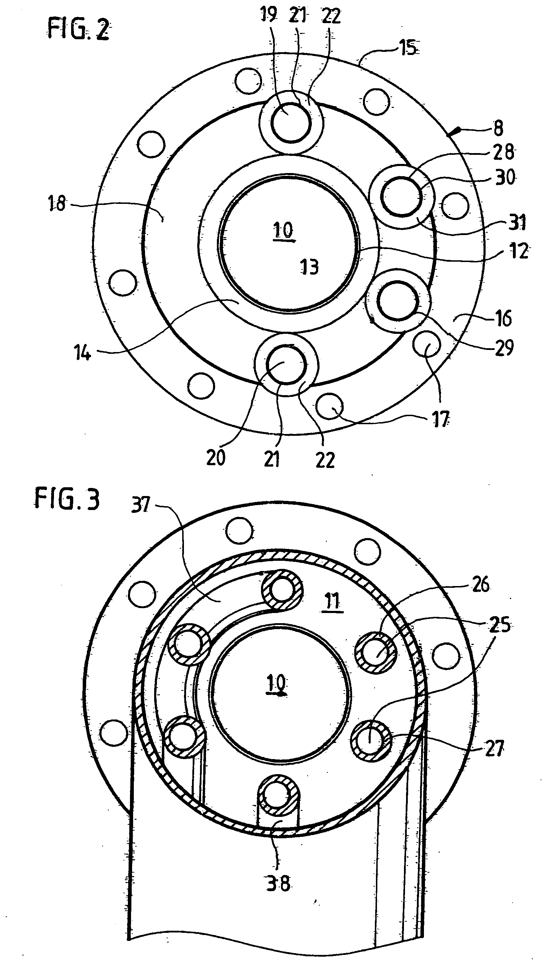

Im Bereich der Enden der Rohre 26, 27 weisen die Flansche 8, 9 weitere Durchbrechungen 28, 29 auf, wie Fig. 2 zu entnehmen ist. Diese Durchbrechungen 28, 29 dienen als Mündungen des dritten Hohlraums 25. Wie Fig. 2 weiter erkennen läßt, liegen diese Mündungen 28, 29 jedoch nicht einander diametral gegenüber, sondern sind einander angenähert; sie liegen insbesondere beide in dem selben Abschnitt des inneren, ringförmigen Bereichs 18 eines Flansches 8, 9, der durch die beiden zueinander diametralen Mündungen 19, 20 des zweiten Hohlraums 11 eingeschlossen wird. Dabei sind die beiden Flansche 8, 9 eines Standardrohrs 2 - jeweils von außen gesehen - nicht identisch, sondern spiegelverkehrt, d.h. spiegelbildlich zueinander. Aufgrund dessen erstrecken sich die Rohre 26, 27 des dritten Hohlraums 25 auf ihrer gesamten Länge parallel zueinander.

Auch diese Mündungen 19, 20 sind von je einer ringförmigen Einsenkung 30 umgeben, zwecks Aufnahme je eines Dichtungsrings 31, bspw. aus einem elastischen Material.

Werden daher mehrere gleichartige Standardrohre 2 aneinandergesetzt, ergibt sich ein erster, gerade durchgehender Kanal, nämlich jeweils die aneinandergesetzten zentralen Hohlräume 10, ferner ein zweiter, gerade durchgehender Kanal, nämlich jeweils die aneinandergesetzten ringförmigen Hohlräume 11, sowie wenigstens ein, im vorliegenden Fall zwei, gerade durchgehende Kanäle, nämlich jeweils die aneinandergesetzten exzentrischen Rohre 26 bzw. 27. Im ersten, zentralen Kanal 10 strömt das zu temperierende Medium M₁; im zweiten, ringförmigen Kanal 11 strömt das Heiz- oder Kühlmedium M₂ vorwärts, und in den exzentrischen Kanälen 26, 27 strömt dieses wieder zurück.

Im Bereich eines Endstücks 4 gibt es jeweils einen Bereich, wo der zweite, ringförmige Hohlraum 11 mit dem/den dritten, exzentrischen Hohlraum (-räumen) 25, 26, 27 kommuniziert und es dem Heiz- oder Kühlmedium M₂ ermöglicht, vom Vorlauf in den Rücklauf zu wechseln. Diese Strömungsumkehrpunkte werden durch die freien Enden 32 der Rohre 26, 27 gebildet. Diese sind maximal nach oben gebogen, damit sich zunächst der zweite Hohlraum 11 möglichst vollständig füllen muß, bevor das Kühl- oder Heizmedium M₂ in den dritten Hohlraum 25 ein- und dann innerhalb desselben zurückströmen kann.

Das Endstück 5 weist eine Besonderheit auf: Es dient zum Abschluß eines nach unten gerichteten Leitungsabschnittes. In diesem Fall ist die Funktion von Vor- und Rücklauf vertauscht. Indem an den Mündungen 19, 20 des zweiten Hohlraums nach unten ragende Rohre 33, 34 angesetzt sind, strömt das Heiz- oder Kühlmedium M₂ im Vorlauf zunächst an dem inneren Rohr 6 vorbei und tritt sodann an den freien Enden 35 dieser Rohre 33, 34 knapp oberhalb des unteren Flanschs 36 aus, der jedoch für den zweiten Hohlraum 11 keine Mündungen aufweist, sondern vollkommen verschlossen ist. Sodann füllt das Heiz- oder Kühlmedium M₂ durch weiteren Zulauf den ringförmigen Hohlraum zwischen den beiden zueinander konzentrischen Rohren 6, 7 aus und temperiert dabei das Medium M₁ innerhalb des zentralen Hohlraums 10. Schließlich quillt das Heiz- oder Kühlmedium M₂ an den einander benachbarten Mündungen 28, 29 hervor bzw. nach oben.

Eine weitere Besonderheit stellt das T- oder Abzweigstück 3 dar:
Hier verzweigen sich sowohl das innere Rohr 6 als auch das äußere Rohr 7. Während der von dem inneren Rohr 6 umschlossene Hohlraum 10 für das Medium M₁ dadurch nach wie vor einfach zusammenhängend ist, kann der zwischen den beiden, sich jeweils verzweigenden Rohren 6, 7 eingeschlossene Hohlraum 11 für das Medium M₂ in diesem Fall sogar als dreifach zusammenhängend bezeichnet werden.

Allerdings ist die Strömungsrichtung innerhalb des zweiten Hohlraums 11 etwas anders als in den Standardrohrelementen 2 üblich. Denn das vorlaufende Medium M₂ wird innerhalb des Abzweigstücks 3 zunächst von zwei Rohren 37, 38 nach unten zu dem abzweigenden Flansch 39 geführt, ohne den eigentlichen Hohlraum 11 in dem Abzweigstück 3 zu füllen. Die Rohre 37, 38 verbinden jeweils zwei der diametral angeordneten Mündungen 19, 20 der unterschiedlichen Flansche 8, 39 direkt miteinander.

Sodann füllt das Medium M₂ zunächst das unten angeschlossene Rohrsystem und quillt sodann durch die einander benachbarten Mündungen 28, 29 in dem Flansch wieder nach oben. Dort sind innerhalb des Abzweigstücks 3 jedoch wiederum Rohre 40, 41 angeschlossen, welche bis nahe zu dem stromaufwärtigen (Eingangs-) Flansch 8 zurückführen und dort frei enden. An diesen freien Rohrenden tritt das Medium M₂ sodann aus und füllt nun der eigentliche zweite Hohlraum 11 von der stromaufwärtigen Anschlußseite her, wie dies auch bei den Standardrohrabschnitten 2 der Fall ist. Wenn sich der Hohlraum 11 innerhalb des Abzweigstücks 3 füllt, strömt das Medium M₂ durch die stromabwärtigen, diametral angeordneten Mündungen 19, 20 weiter in das als nächstes folgende, nicht abzweigende Rohrstück, im Beispiel nach fig. 1 in das Endstück 4. Das von dort durch die Mündungen 28, 29 in dem Flansch 9 des Abzweigstücks 3 wieder eintretende, rücklaufende Medium M₂ wird sodann von zwei gerade gestreckten Rohren 26, 27 direkt zu den Mündungen 28, 29 in dem stromaufwärtigen Flansch 8 geleitet. Dadurch werden alle Abschnitte des inneren Rohres 6 auch im Bereich einer Abzweigung gleichmäßig temperiert.

Eine besondere Ausführungsform eines Ausgleichsrohrs 42 zeigt Fig. 4. Man erkennt, dass die Rohre 6', 7' bereichsweise als Faltenbalg 43 gestaltet sind, so dass sich der Abstand zwischen den beiden Flanschen 8', 9' nicht ändert, auch wenn sich die Temperatur des Rohrleitungsabschnitts 42 ändert. Die daraus eigentlich resultierende Längenänderung wird im Bereich des Faltenbalgs 43 durch eine Verformung (Annäherung oder Entfernung der Wülste) ausgeglichen. Der Faltenbalg 43 muß sich nicht von Flansch 8' zu Flansch 9' durchgehend erstrecken, sondern kann sich auf einen vergleichsweise kurzen Abschnitt beschränken. Auch muß nicht jedes Rohr 2 oder sonstige Element 3 bis 5 einen derartigen Abschnitt aufweisen; es genügt vielmehr ein derartiges Ausgleichsstück 42 oder ein derartiger Faltenbalgabschnitt 43 in jedem geraden Rohrleitungszug, da bspw. Streckungen anderer Rohrabschnitte durch eine gleichzeitige Stauchung des Ausgleichsrohrs 42 bzw. Faltenbalgabschnitts 43 ausgeglichen werden können.

Der innere Aufbau des Ausgleichselements 42 kann dem Standardrohr 2 gemäß Fig. 1 entsprechen. Das Standardrohr 2 kann auch in gebogener Ausführungsform vorhanden sein; in einem solchen, gebogenen Rohr ist ein Faltenbalg 43 normalerweise nicht erforderlich.

Das erfindungsgemäße Prinzip ist derart gestaltet, dass der Hohlraum 11 beim Befüllen mit dem Medium M₂ automatisch entlüftet wird; entsprechend kann es bei Bedarf auch ohne Demontage vollkommen entleert werden.

**Bezugszeichenliste**

| | | | |
|---|---|---|---|
| 1 | Rohrleitungsanlage | 26 | Rohr |
| 2 | Standardrohr | 27 | Rohr |
| 3 | Abzweigstück | 28 | Durchbrechung |
| 4 | Endstück | 29 | Durchbrechung |
| 5 | Endstück | 30 | Einsenkung |
| 6 | inneres Rohr | 31 | Dichtungsring |
| 7 | äußeres Rohr | 32 | freies Ende |
| 8 | Flansch | 33 | Rohr |
| 9 | Flansch | 34 | Rohr |
| 10 | erster Hohlraum | 35 | freies Ende |
| 11 | zweiter Hohlraum | 36 | unterer Flansch |
| 12 | zentrale Ausnehmung | 37 | Rohr |
| 13 | Einsenkung | 38 | Rohr |
| 14 | Dichtungsring | 39 | abzweigender Flansch |
| 15 | Außenumfang | 40 | Rohr |
| 16 | Ringbereich | 41 | Rohr |
| 17 | Bohrung | 42 | Ausgleichsstück |
| 18 | ringförmiger Bereich | 43 | Faltenbalg |
| 19 | Durchbrechung | | |
| 20 | Durchbrechung | | |
| 21 | Einsenkung | | |
| 22 | Dichtungsring | | |
| 23 | Anschlußflansch | | |
| 24 | Anschlußflansch | | |
| 25 | dritter Hohlraum | | |

## Patentansprüche

1. Einrichtung (1-5;42) zur Temperierung eines Fluids (M₁), in Form eines Rohrleitungsabschnitts (1-5;42) mit zwei zueinander konzentrischen Rohren, nämlich einem inneren Rohr (6) und einem äußeren Rohr (7), ferner mit einem von dem inneren Rohr (6) umschlossenen ersten, zentralen Hohlraum (10) für die kontinuierliche Durchleitung eines zu temperierenden Mediums (M₁) von einem ersten Ende des Rohrleitungsabschnitts (1-5;42) zu einem gegenüber liegenden Rohrende, sowie mit einem diesen ersten Hohlraum (10) ringförmig umgebenden, zweiten Hohlraum (11) zwischen dem inneren Rohr (6) und dem äußeren Rohr (7) für ein Heiz- oder Kühlmedium (M₂) mit wenigstens einem Einlaß (19,20) und wenigstens einem Auslaß (19,20) zur kontinuierlichen Durchleitung des Heiz- oder Kühlmediums (M₂), und mit wenigstens einem dritten, mit der Rohrleitung (1-5;42) integrierten Hohlraum (25) zur Rückleitung des Heiz- oder Kühlmediums (M₂), wobei der Auslaß (28,29) des dritten Hohlraums sich in der Nähe des Einlasses (19,20) des zweiten Hohlraums befindet und der dritte Hohlraum (25) von dem zweiten Hohlraum (11) getrennt ist oder über seinen Einlaß mit einem Auslaß des zweiten Hohlraums (11) gekoppelt ist, **dadurch gekennzeichnet, dass**
a) an einem Rohrleitungsabschnitt (1-5;42) ein, zwei oder drei Flansche (8,9,23,24,39) zur Verbindung mit anderen Rohrleitungsabschnitten (1-5;42) vorgesehen sind,
b) wobei jeder Flansch (8,9,23,24,39) eine kreisringscheibenförmige Gestalt aufweist, mit einer zentralen Ausnehmung (12) in der Mitte, die etwa deckungsgleich mit dem Querschnitt des ersten Hohlraums (10) ist, und mit einem Außenumfang (15), dessen Durchmesser größer ist als das äußere Rohr (7), wobei in dem radial nach außen überstehenden Ringbereich (16) des Flansches (8,9,23,24,39) mehrere Bohrungen (17) zum Hindurchstecken von Schrauben angeordnet sind, um verschiedene Rohrleitungsabschnitte (1-5;42) zusammenzuschrauben,
c) und wobei in wenigstens einem Flansch (8,9,23,24,39) sämtliche Hohlräume (10,11,25) münden,
d) wobei sämtliche Mündungen (12,19,20,28,29) verschiedener Hohlräume (10,11,25) im Bereich eines Flanschs (8,9,23,24,39) durch voneinander getrennte Dichtungsringe (14,22,31) gegeneinander isoliert sind.

2. Einrichtung nach Anspruch 1, **dadurch gekennzeichnet, dass** der erste bzw. zentrale Hohlraum (10) einen kreisförmigen Querschnitt aufweist.

3. Einrichtung nach Anspruch 1 oder 2, **dadurch gekennzeichnet, dass** der erste bzw. zentrale Hohlraum (10) offen- und/oder absperrbar ist, bspw. durch einen Schieber oder eine Klappe.

4. Einrichtung nach einem der vorhergehenden Ansprüche, **dadurch gekennzeichnet, dass** der zweite Hohlraum (11) im Bereich eines Flansches (8,9,23,24,39) in Form von zwei einander etwa diametral gegenüber liegenden Öffnungen (19,20) mündet.

5. Einrichtung nach einem der vorhergehenden Ansprüche, **dadurch gekennzeichnet, dass** der dritte Hohlraum (25) durch ein oder mehrere Rohre (26,27) gebildet ist, welche(s) innerhalb des zweiten Hohlraums (11) verläuft (verlaufen).

6. Einrichtung nach Anspruch 5, **dadurch gekennzeichnet, dass** ein oder mehrere Rohre (26,27) des dritten Hohlraums (25) sich zwischen zwei Flanschen (8,9,39) durchgehend erstrecken und in beiden Flanschen (8,9,39) münden.

7. Einrichtung nach Anspruch 5, **dadurch gekennzeichnet, dass** ein oder mehrere Rohre (26,27) des dritten Hohlraums (25) nur in einem Flansch (8,9,23,24,39) münden und sich bis in die Nähe eines anderen Flansches erstrecken.

8. Einrichtung nach Anspruch 7, **dadurch gekennzeichnet, dass** ein oder mehrere Rohre (26,27) des dritten Hohlraums (25) im Bereich ihres/ihrer freien Endes (-en) (32) umgebogen ist/sind.

9. Einrichtung nach Anspruch 8, **dadurch gekennzeichnet, dass** zwei Rohre (26,27) des dritten Hohlraums (25) im Bereich ihrer freien Enden (32) in die selbe Richtung umgebogen sind.

10. Einrichtung nach einem der Ansprüche 5 bis 9, **dadurch gekennzeichnet, dass** die Mündungen (28,29) mehrerer, vorzugsweise aller Rohre (26,27) des dritten Hohlraums (25) auf dem selben Ring-Abschnitt (18) eines Flanschs (8,9,23,24,39) liegen, der von zwei Mündungen (19,20) des zweiten Hohlraums (11) abgegrenzt wird.

## Claims

1. Equipment (1-5; 42) for temperature exchange with a fluid (M₁) in form of a piping section (1-5; 42) with two pipes being concentric to each other, namely one inner pipe (6) and one outer pipe (7), furthermore with a first central hollow space (10) surrounded by the inner pipe (6) for the continuous conveyance of a medium (M₁) to be either cooled or heated from a first end of the piping section (1.-5; 42) to an opposite pipe end as well as with a second hollow space (11) between the inner pipe (6) and the outer pipe (7) annularly surrounding that first hollow space (10) for a heating or cooling medium (M₂) with at least one inlet (19, 20) and at least one outlet (19, 20) for the continuous conveyance of a heating or cooling medium (M₂), and with at least one third hollow space (25) integrated within the piping section (1-5; 42) for the return flow of the heating or cooling medium (M₂), at which the outlet (28, 29) of the third hollow space is located near the inlet (19, 20) of the second hollow space (11) and where the third hollow space (25) is separated from the second hollow space (11), or is interconnected via its inlet with an outlet of the second hollow space (11), **characterized by the fact** that
a) at a piping section (1-5; 42) one, two, or three flanges (8, 9, 23, 24, 39) are provided for the connection to other piping sections (1-5; 42),
b) in which each flange (8, 9, 23, 24, 39) exhibits a circular disk shape with a centrally located hollow (12), which is approximately congruent with the cross section of the first hollow space (10), and with an outer circumference (15) of a diameter which is greater than the outer pipe (7), and where in the ring area (16) radially outward protruding of the flange (8, 9, 23, 24, 39) several drilled holes (17) are arranged for sticking though bolts for connecting of several piping sections (1-5; 42) by bolting together,
c) and where in at least one flange (8, 9, 23, 24, 39) all hollow spaces (10, 11, 25) open into,
d) and where all openings (12, 19, 20, 28, 29) of the different hollow spaces (10, 11, 25) are hermetically isolated from each other in the area of a flange (8, 9, 23, 24, 39) by individual sealing rings (14, 22, 31) separate from each other.

2. Equipment according to claim 1, **characterized by** the fact that the first respectively central hollow space (10) exhibits a circular cross section.

3. Equipment according to claim 1 or 2, **characterized by** the fact that the first respectively central hollow space (10) is openable and/or closable, for example by way of a gate valve or shutoff flap.

4. Equipment according to one of the foregoing claims, **characterized by** the fact that the second hollow space (11) opens into in the area of a flange (8, 9, 23, 24, 39) in form of two approximately diametrically opposed openings (19, 20).

5. Equipment according to one of the foregoing claims, **characterized by** the fact that the third hollow space (25) is comprised by one or more pipes (26, 27), which is/are running within the second hollow space (11).

6. Equipment according to claim 5, **characterized by** the fact that one or more pipes (26, 27) of the third hollow space (25) extend full-length between two flanges (8, 9, 39), ending open into both flanges (8, 9, 39).

7. Equipment according to claim 5, **characterized by** the fact that one or more pipes (26, 27) of the third hollow space (25) are ending open in only one flange (8, 9, 23, 24, 39) and extend into the area close to another flange.

8. Equipment according to claim 7, **characterized by** the fact that one or more pipes (26, 27) of the third hollow space (25) is/are bent off in the area of its/their free end(s) (32).

9. Equipment according to claim 8, **characterized by** the fact that two pipes (26, 27) of the third hollow space (25) are bent off in the same direction in the area of their free ends (32).

10. Equipment according to one of the claims 5 through 9, **characterized by** the fact that the openings (28, 29) of several, preferably of all pipes (26, 27) of the third hollow space (25) are located within the same ring section (18) of a flange (8, 9, 23, 24, 39), which is delimited by two openings (19, 20) of the second hollow space (11).

## Revendications

1. Dispositif (1-5 ; 42) de thermorégulation d'un fluide (M₁), sous forme d'une section de conduite (1.5 ; 42) comportant deux tubes concentriques l'un par rapport à l'autre, à savoir un tube intérieur (6) et un tube extérieur (7), en outre une première cavité (10) centrale entourée par le tube intérieur (6) pour l'acheminement continu d'un fluide (M₁) qui doit être thermorégulé d'une première extrémité de la section de conduite (1-5 ; 42) à une extrémité de tube opposée, ainsi qu'une deuxième cavité (11) entourant de manière annulaire Cette première cavité (10), ladite deuxième cavité étant entre le tube intérieur (6) et le tube extérieur (7) pour un fluide de chauffage ou de refroidissement (M₂) avec au moins une entrée (19, 20) et au moins une sortie (19, 20) pour l'acheminement continu du fluide de chauffage ou de refroidissement (M₂), et au moins une troisième cavité (25) intégrée à la conduite (1-5 ; 42) pour la conduite de retour du fluide de chauffage ou de refroidissement (M₂), en ce que la sortie (28, 29) de la troisième cavité se trouve à proximité de l'entrée (19, 20) de la deuxième cavité et la troisième cavité (25) est séparée de la deuxième cavité (11) ou est couplée par le biais de son entrée à la sortie de la deuxième cavité (11), **caractérisé en ce qu'**
a) une, deux ou trois brides (8, 9, 23, 24, 39) sont prévues pour le raccord avec d'autres section de conduite (1-5 ; 42) au niveau d'une section de conduite (1-5 ; 42),
b) **en ce que** chaque bride (8, 9, 23, 24, 39) présente une forme de disque annulaire, avec un évidement central (12) au milieu, qui coïncide approximativement à la section transversale de la première cavité (10), et d'une circonférence extérieure (15) dont le diamètre est supérieur au tube extérieur (7), **en ce que** plusieurs trous (17) sont réalisés dans la zone annulaire (16) dépassant radialement vers l'extérieur de la bride (8, 9, 23, 24, 39), lesdits trous servant à l'insertion de vis pour visser différentes sections de conduite (1-5 ; 42),
c) et **en ce que** toutes les cavités (10, 11, 25) débouchent dans au moins une bride (8, 9, 23, 24, 39),
d) **en ce que** toutes les embouchures (12, 19, 20, 28, 29) des différentes cavités (10, 11, 25) dans la zone d'une bride (8, 9, 23, 24, 39) sont isolées les unes par rapport aux autres par des joints séparés les uns de autres (14, 22, 31).

2. Dispositif selon la revendication 1, **caractérisé en ce que** la première cavité ou cavité centrale (10) présente une section transversale circulaire.

3. Dispositif selon la revendication 1 ou 2, **caractérisé en ce que** la première cavité ou cavité centrale (10) peut être ouverte et/ou fermée, par exemple par une vanne ou un clapet.

4. Dispositif selon l'une des revendications précédentes, **caractérisé en ce que** la deuxième cavité (11) débouche sous forme de deux orifices diamétralement opposés (19, 20) dans la zone d'une bride (8, 9, 23, 24, 39).

5. Dispositif selon l'une des revendications précédentes, **caractérisé en ce que** la troisième cavité (25) est formée par un ou plusieurs tubes (26, 27) qui passe (passent) à l'intérieur de la deuxième cavité (11).

6. Dispositif selon la revendication 5, **caractérisé en ce qu'**un ou plusieurs tubes (26, 27) de la troisième cavité (25) s'étendent de manière continue entre deux brides (8, 9, 39) et qu'ils débouchent dans les deux brides (8, 9, 39).

7. Dispositif selon la revendication 5, **caractérisé en ce qu'**un ou plusieurs tubes (26, 27) de la troisième cavité (25) ne débouchent que dans une bride (8, 9, 23, 24, 39) et qu'ils s'étendent jusqu'à proximité d'une autre bride.

8. Dispositif selon la revendication 7, **caractérisé en ce qu'**un ou plusieurs tubes (26, 27) de la troisième cavité (25) est/sont recourbé(s) dans la zone de son/leurs extrémité(s) libre(s) (32).

9. Dispositif selon la revendication 8, **caractérisé en ce que** deux tubes (26, 27) de la troisième cavité (25) sont recourbés dans la zone de leurs extrémités libres (32) dans le même sens.

10. Dispositif selon l'une des revendications 5 à 9, **caractérisé en ce que** les embouchures (28, 29) de plusieurs, de préférence de tous les tubes (26, 27) de la troisième cavité (25) se trouvent sur la même section annulaire (18) d'une bride (8, 9, 23, 24, 39) qui est délimitée par deux embouchures (19, 20) de la deuxième cavité (11).
